# EUROPÄISCHE PATENTSCHRIFT

(11) **EP 1 278 665 B1**
(45) Veröffentlichungstag und Bekanntmachung des Hinweises auf die Patenterteilung: **21.03.2007**
(21) Anmeldenummer: 01919219.4
(22) Anmeldetag: 20.03.2001
(51) Int. Cl.: B60S 1/34

(54) **GELENKTEIL FÜR SCHEIBENWISCHER**
JOINT PART FOR A WINDSHIELD WIPER
PARTIE D'ARTICULATION POUR ESSUIE-GLACE

(30) Priorität: 22.04.2000 DE 10020004
(43) Veröffentlichungstag der Anmeldung: 29.01.2003
(73) Patentinhaber: ROBERT BOSCH GMBH, 70442 Stuttgart (DE)
(72) Erfinder: MERKEL, Wilfried, 77876 Kappelrodeck (DE); DAENEN, Roger, B-3770 Vlytingen-Riemst (BE)
(86) Internationale Anmeldenummer: PCT/DE2001/001054
(87) Internationale Veröffentlichungsnummer: WO 2001/081135

(56) Entgegenhaltungen:
- EP-A- 0 579 550
- DE-A- 19 735 301
- FR-A- 2 724 897

## Beschreibung

### Stand der Technik

Die Erfindung geht von einem Gelenkteil für Scheibenwischer nach dem Oberbegriff des Anspruchs 1 aus. Ein derartiges Gelenkteil ist z.B. aus der DE-A-19 735 301 bekannt.

Herkömmliche Scheibenwischer weisen einen Wischarm auf, der aus einem angetriebenen Befestigungsteil, einem mit diesem über ein Abklappgelenk verbundenen Gelenkteil und aus einer sich an das Gelenkteil starr anschließenden Wischstange aufgebaut ist. Ferner besitzt der Scheibenwischer ein an der Wischstange angelenktes Wischblatt, das aus einem Tragbügelsystem und einer von diesem gehaltenen Wischleiste besteht. Das hakenförmige Ende der Wischstange greift zwischen zwei Seitenwangen des Tragbügelsystems und umfaßt einen Gelenkbolzen. Das so gebildete Gelenk führt das Wischblatt mit der Wischleiste über eine Kraftfahrzeugscheibe, wobei das Gelenkteil und das Tragbügelsystem es ermöglichen, dass sich die Wischleiste einer Wölbung der Kraftfahrzeugscheibe anpasst. Ein erforderlicher Anpressdruck der Wischleiste wird mit mindestens einer Zugfeder erreicht, die das Befestigungsteil und das Gelenkteil gemeinsam mit der Wischstange über das Abklappgelenk verspannt. In der Regel ist die Zugfeder mit einem hakenförmigen Ende an einem Querstift am Befestigungsteil und mit dem anderen, ebenfalls hakenförmigen Ende, an einer Einhängevorrichtung am Gelenkteil eingehängt.

Die Form der einzelnen Bauteile des Wischarms wird durch unterschiedliche Anforderungen und Belastungen beeinflußt. Sie sollten möglichst torsionssteif, biegefest und im Sichtfeld schmal ausgeführt sein, damit das Wischblatt schwingungsfrei und kontrolliert über die Kraftfahrzeugscheibe geführt wird und dabei im Sichtfeld wenig stört. Bekannte Scheibenwischer besitzen deshalb ein relativ breites Befestigungsteil und ein aus Blech geformtes Gelenkteil, das in der Regel ein zur Kraftfahrzeugscheibe hin offenes U-Profil aufweist. Wegen seines günstigen Widerstandsmoments ist es besonders torsionssteif und es kann die Zugfeder verdeckt aufnehmen. In Richtung zur Verbindungsstelle mit der Wischstange verjüngt sich das Gelenkteil, damit es im Sichtfeld schmal ausgeführt ist.

Die Materialbelastungen im Wischarm hängen von verschiedenen Faktoren ab, wie Antriebs- und Anpresskräften, deren Angriffspunkten und Hebelarmen sowie dem Widerstandsmoment des Wischarms. Da die optimale Formgebung nicht allein auf die Belastungsverläufe und die Durchbiegungen abgestimmt werden muss, sondern noch weitere Gesichtspunkte zu berücksichtigen sind, wie ein ausreichender Raum für die Zugfeder, der Strömungswiderstand im Fahrtwind und insbesondere eine Sichtbehinderung beim Wischvorgang, müssen oftmals Kompromisse eingegangen werden.

Aus der DE 197 35 301 A1 ist ein Wischarm bekannt, bei dem aus Blech geformte Teile, z.B. das Befestigungsteil und insbesondere das Gelenkteil mit einer angeformten Wischstange, in verschiedenen Bereichen mit unterschiedlich vielen Blechlagen übereinander zusammengefaltet werden, bis die für den jeweiligen Querschnitt erforderliche Materialstärke erreicht ist. Das Material kann dabei einfach oder mehrfach um ca. 180° umgelegt werden oder es können entfernte Flächenbereiche in einem oder vorzugsweise in mehreren Schritten zusammengelegt werden, um sich gegenseitig zu stützen. Somit können aus einem relativ dünnen Blech in unterschiedlichen Bereichen unterschiedliche Materialstärken erzielt werden, die an die unterschiedlichen Belastungen angepasst werden können. Nach Druckschrift werden die Blechteile aus ebenen Blechtafeln hergestellt. Sie weisen Kontur- und Faltflächen auf. Die Konturflächen werden verwendet für die grundlegende Formgebung des Blechteils und die Faltflächen für Befestigungsbereiche und um unterschiedliche Materialstärken zu erzielen.

Das noch ebene Blechteil für ein Gelenkteil wird mit einem Schneide- oder Stanzverfahren aus einer Blechtafel herausgetrennt. Nach diesen Fertigungsverfahren sind mehrere Gelenkteile nebeneinander angeordnet und zwar so, dass ein die äußere Kontur des ebenen Blechteils umfassendes Rechteck den Materialbedarf für ein Gelenkteil ergibt. Dabei fällt je nach Gestaltung des Blechteils unterschiedlich viel Verschnittmaterial an, denn auch bei Verwendung der Falttechnik verjüngt sich das ebene-Blechteil in der Regel von der Anlenkstelle an das Befestigungsteil bis zum freien Ende der Wischstange entsprechend der abnehmenden Materialbelastung.

Der bekannte Wischarm besitzt für eine Zugfeder am Gelenkteil eine Einhängevorrichtung. Diese wird von zwei einander gegenüberliegenden, zur Gelenkseite weisenden Verlängerungen von innersten Blechlagen gebildet. Die Verlängerungen sind an ihren Enden gelocht und in den Zwischenraum zwischen den Seitenwänden bis zu einer Mittelebene gekröpft, sodass die Löcher deckungsgleich übereinander liegen. In dem Bereich der Verlängerungen bis hin zum Gelenk einschließlich weist das Gelenkteil eine Blechlage weniger auf als in dem Bereich zur Wischstange hin.

Aus der DE 693 05 442 T2 (EP-A-0 579 550) ist ein einlagig aus Blech geformter Gelenkhebel für einen Wischarm bekannt. Dabei sind weitere Varianten für Einhängevorrichtungen vorgeschlagen, welche zusätzliche Verbindungsteile in Platten- oder Achsform aufweisen. Die zusätzlichen verbindungsteile sind mit den seitlichen Faltflächen des Gelenkteils verschweißt, vernietet oder in angeformte Ansätze eingefalzt. Bei dieser Lösung fällt zwar kein zusätzlicher Verschnitt an, allerdings führt sie durch eine höhere Anzahl an Bauteilen zu einer beträchtlichen Erhöhung der Fertigungskosten des Scheibenwischers insgesamt. Zudem ist sie optisch insofern ungünstig, da sich oftmals die Enden der Einsetzachse für die Feder nicht weit genug im Innenraum zwischen den Seitenwänden des U-Profils befinden und deshalb von außen sichtbar sind.

Aus der FR-A-2 724 897 ist ein Gelenkteil für einen Scheibenwischer bekannt, das ein U-förmiges Querschnittprofil besitzt. In mindestens einer Seitenwand des Gelenkteils ist von der unteren Kante ausgehend ein Schlitz eingearbeitet, der mit seinem geschlossenen Ende in Längsrichtung zum antriebsseitigen Ende des Gelenkteils hin geneigt verläuft. In den Schlitz ist ein Querstift mit einem Ende eingesetzt, während das andere Ende in eine Bohrung oder einen gleichen Schlitz in der gegenüberliegenden Seitenwand des Gelenkteils eingreift. Der Querstift dient zum Einhängen einer Zugfeder.

### Vorteile der Erfindung

Nach der Erfindung ist in die innersten Blechlagen der Seitenwände eines mittels Falttechnik hergestellten U-förmigen Gelenkteils von der unteren Kante her ein Schlitz quer zur Längsachse eingearbeitet, in den ein Stift eingesetzt ist, der als Einhängevorrichtung für eine Zugfeder dient. Der Stift wird von der unteren Kante aus in den Schlitz gefügt und gelangt durch dessen Verlauf relativ weit in den Innenraum des U-Profils, wo er zwischen den äußeren Blechlagen der Seitenwände gehalten wird, z.B. indem er eingepresst und/oder in einer Vertiefung verrastet ist. Es ist ferner möglich, dass er durch die Zugfeder in einer Endlage gehalten wird, wenn der Schlitz mit der Deckwand einen Winkel einschließt, dessen Spitze zum Abklappgelenk weist. Die an dem Stift eingehängte Zugfeder, deren anderes Ende am Befestigungsteil an einem Quersteg befestigt ist, verspannt das Gelenkteil und das Befestigungsteil über eine gemeinsame Drehachse, die durch einen Gelenkbolzen am Befestigungsteil gebildet wird.

An einem Ende des Gelenkteils ist eine Wischstange angeformt und am anderen Ende befindet sich das gelenkseitige Ende zum Befestigungsteil. Ungefähr in der Mitte des Gelenkteils ist der Stift für die Zugfeder angeordnet. Die eingehängte Zugfeder erstreckt sich von hier aus in Richtung gelenkseitiges Ende und damit vorteilhafterweise im unteren Bereich des Gelenkteils, so dass sie durch die Seitenwände des U-Profils verdeckt und von außen nicht sichtbar ist. Zudem ist die Feder leicht in die Stifteinhängung zu montieren, wodurch Fertigungskosten eingespart werden.

Nach Anspruch 4 sieht die Erfindung vor, dass jeweils aus der innersten Blechlage der Seitenwände in Längsrichtung ein längliches Stück bis auf eine kurze Seite ausgeklinkt und an seinem freien Ende gelocht ist wobei die Stücke um ca. 90° nach innen gebogen sind und sich ihre Enden so überlappen, dass sich die Löcher überdecken. Die ausgeklinkten Stücke bilden somit einen Quersteg, an dem die Zugfeder eingehängt werden kann. Von Vorteil dabei ist, dass der Quersteg nicht als zusätzliches Bauteil montiert und befestigt werden muß, sondern Teile der Seitenwände als Einhängevorrichtung für die Zugfeder genutzt werden, ohne die Stabilität des Gelenkteils zu schwächen. Erfindungsgemäß stützen sich die ausgeklinkten Stücke der Seitenwände im Mittelbereich gegenseitig ab, indem sie sich überlappen und somit am Kraftangriffspunkt verstärkt sind. Neben guter Stabilität werden durch diese Ausgestaltung der Erfindung die Fertigungskosten entscheidend verringert, da Montagearbeiten für einen Quersteg vollständig entfallen.

Bei einer Variante der vorher beschriebenen Ausgestaltung der Erfindung sind die sich überlappenden Enden der ausgeklinkten Stücke in Richtung auf das Gelenk abgewinkelt. Dadurch kann das hakenförmige Ende der Zugfeder um 90° verdreht eingehängt werden, so dass ein nach der anderen Variante benötigter Abstand zwischen der Deckwand des U-Profils und dem Quersteg für den Haken der Feder entfällt und die Feder insgesamt noch weiter im Freiraum des U-förmigen Gelenkteils angeordnet werden kann.

Das flache Blechteil, aus dem mittels Falttechnik das Gelenkteil mit einer angeformten Wischstange hergestellt wird, weist eine äußere Kontur auf, die sich ausgehend vom gelenkseitigen Ende bis zum Wischstangenende erstreckt. Im Mittelbereich nehmen die Höhe der Deckwand und die Höhe der Seitenwände zur Wischstange hin ab und die Kontur des gestanzten Rohlings ist stark verjüngt. Nach einer weiteren Ausgestaltung der Erfindung sind in diesem Bereich an die innersten Blechlagen deckungsgleiche hakenförmige Teile angeformt, die gleichzeitig mit der äußeren Kontur des flachen Blechteils aus einer Blechtafel ausgeschnitten oder ausgestanzt werden. Nach dem Falten verlaufen die innersten Blechlagen des flachen Rohlings aus Blech parallel zur Deckwand des U-Profils und die angeformten, hakenförmigen Teile parallel zu den Seitenflächen. Ein dabei.entstandener, doppelwandiger Haken ragt in den Freiraum des fertigen U-Profils und sein Ende weist zur Wischstange.

Auf einfache Weise wird während der Montage des Scheibenwischers an diesem Haken ein Ende der Zugfeder befestigt. Demzufolge werden nach dieser Ausgestaltung der Erfindung durch die vereinfachte Montage die Fertigungskosten verringert und durch eine bessere Ausnutzung des Blechmaterials wird außerdem der anfallende Verschnitt pro Gelenkteil kleiner. Zudem werden ähnlich gute Festigkeitseigenschaften wie bei der Ausgestaltung mit Einhängestift erreicht, da der Kraftangriffspunkt der Zugfeder am Haken sehr nah an der Verbindung zur inneren Blechlage des Gelenkteils liegt und der Haken deshalb nicht auf Biegung sondern hauptsächlich auf Scherung belastet wird. Ferner verzichtet die zuletzt genannte Ausgestaltung auf zusätzliche Bauteile, was die Fertigungskosten zusätzlich verringert.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Anordnung von Stanzschnitten flacher Blechteile für Gelenkteile auf einer Blechtafel,
- Fig. 2: ein Gelenkteil mit angeformter Wischstange von unten,
- Fig. 3: einen Schnitt entlang einer Linie III-III in Fig. 2,
- Fig. 4: einen vergrößerter Ausschnitt einer Einhängevorrichtung für eine Zugfeder und
- Fig. 5-7: Varianten zu Fig. 4.

### Beschreibung der Ausführungsbeispiele

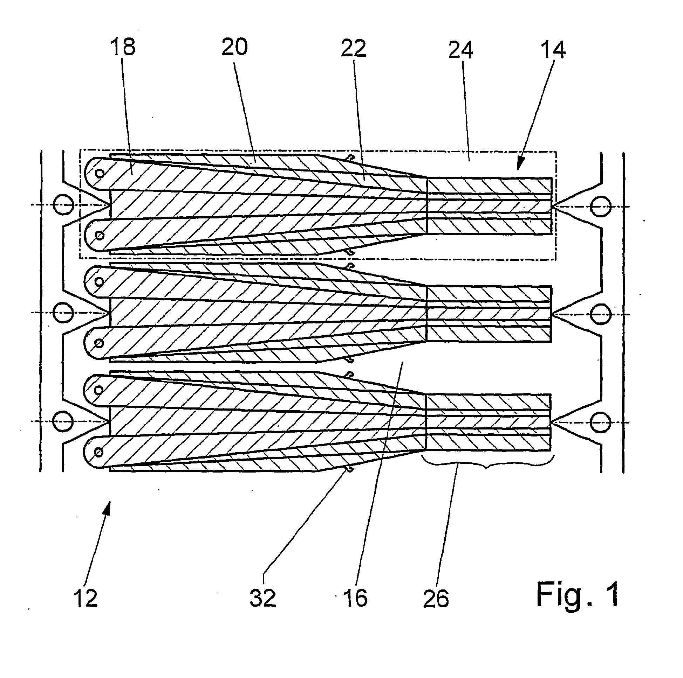

In Fig. 1 ist ein Stanzschnitt 12 mit noch ebenen Blechteilen 14 dargestellt, die aus einer Blechtafel 16 ausgestanzt oder ausgeschnitten werden. Ein Blechteil 14 weist eine Konturfläche 18 mit symmetrisch angrenzenden Faltflächen 20 und 22 auf. Die Faltflächen 20 und 22 liegen in einem durch die Konturfläche 18 vorgegebenen Rechteck 24, das von den Flächen 18, 20 ,22 nahezu vollständig ausgefüllt wird, wodurch günstig bei der Herstellung mehrere Blechteile 14 nebeneinander angeordnet werden können, ohne dass große Mengen an Verschnittmaterial anfallen.

Aus der Konturfläche 18 und den Faltflächen 20, 22 wird später in einem oder mehreren Arbeitsgängen ein Gelenkteil 10 durch Biegen geformt, wobei die Konturfläche 18 nach dem Biege- bzw. Umlegevorgang im wesentlichen die äußere Kontur ergibt. Die Faltflächen 20, 22 dienen dazu, in bestimmten Bereichen des Gelenkteils 10 größere Wandstärken durch mehrere Blechlagen zu erzeugen, indem sie beispielsweise einfach oder mehrfach um 180° umgelegt oder zusammengefaltet werden. So wird beispielsweise der Bereich 26 zu einer später am Gelenkteil 10 angeformten Wischstange 28 zusammengefaltet.

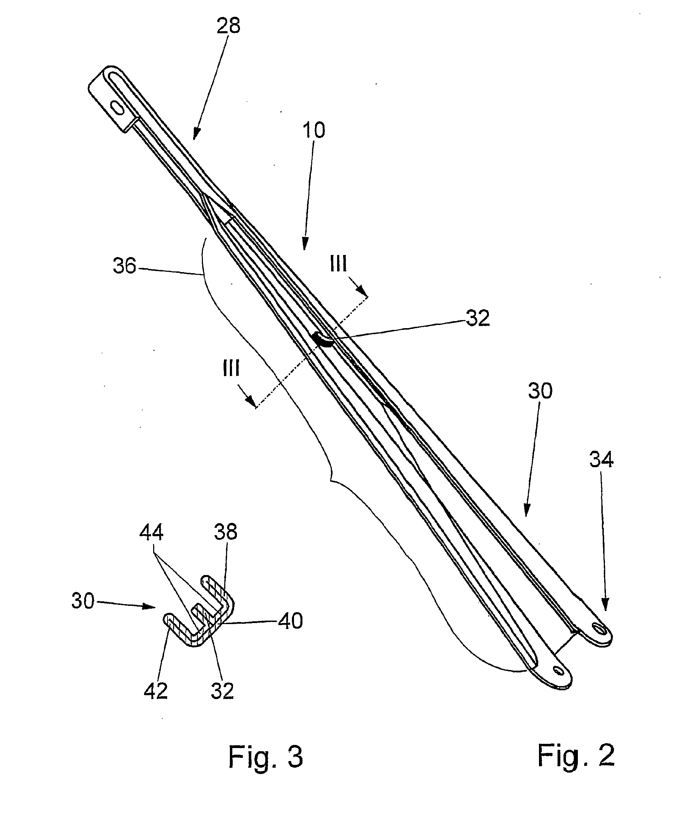

Erfindungsgemäß wird aus dem Verschnittmaterial vom Stanz- oder vom Schnittverfahren eine Einhängevorrichtung in Form eines gebogenen Hakens 32 hergestellt. Dieser ist innerhalb des Rechtecks 24 an der innersten Blechlage der Faltflächen 20, 22 am stark verjüngten Mittelbereich angeformt und wird beim Trennen des Blechteils 14 aus der Blechtafel 16 mit diesem ausgestanzt oder ausgeschnitten. Fig. 2 zeigt ein aus dem Blechteil 14 gefaltetes Gelenkteil 10, das ungefähr in der Mitte einen angeformten Haken 32 aufweist. Zudem besitzt das Gelenkteil 10 an einem Ende eine angeformte Wischstange 28 und auf der anderen Seite ein gelenkseitiges Ende 34, das zu einem hier nicht dargestellten Abklappgelenk mit einem ebenfalls nicht dargestellten Befestigungsteil gehört.

Im Bereich 36 weist das Gelenkteil 10 ein U-Profil auf, in dessen Freiraum 30 an einem fertig montierten, hier nicht dargestellten Wischarm eine Zugfeder angeordnet ist, welche das Gelenkteil 10 über das Abklappgelenk mit dem Befestigungsteil verspannt. Die ebenfalls nicht dargestellte Zugfeder wird am Haken 32 eingehängt. Nach der Erfindung ist der Haken 32 so an die innerste Blechlage der Faltfläche 20, 22 angeformt und nach der Falttechnik gefaltet, dass das freie Ende des Hakens in Richtung zur Wischstange 28 weist. Die am Haken 32 eingehängte Zugfeder ist günstig im unteren und breiteren Teil des Bereichs 36 angeordnet und von außen nicht sichtbar.

Das aus dem Blechteil 14 gefaltete U-Profil des Bereichs 36 und der Haken 32 sind als Schnittdarstellung in Fig. 3 zu sehen. Vorteilhafterweise bestehen die Deckwand 40 und die Seitenwände 38, 42 des U-Profils sowie der im Freiraum 30 angeordneten Haken 32 aus einem Blechteil, das teilweise in mehreren Blechlagen übereinander gefaltet ist, um eine höhere Festigkeit zu erhalten. An die innerste Blechlage der Seitenwände 38, 42 schließt sich jeweils eine im gebogenen Zustand parallel zur Deckwand 40 verlaufende Innenwand 44 an, an deren einander zugewandten Kanten deckungsgleiche Haken 32 angeformt sind. Diese sind um 90° in den Freiraum 30 des U-Profils gebogen.

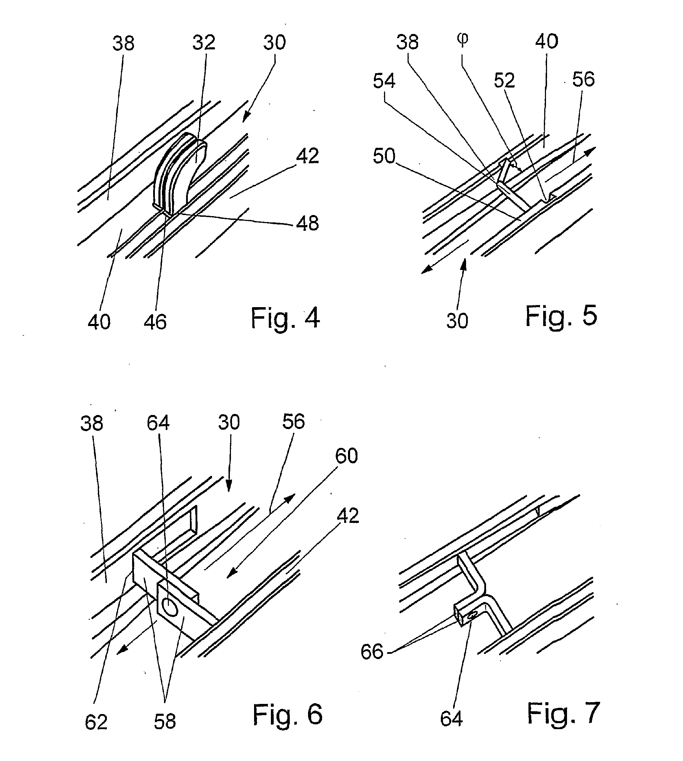

Fig. 4 zeigt das U-Profil des Gelenkteils 10 und die Haken 32 aus einer anderen Perspektive. Eine eingehängte Zugfeder belastet die Haken 32 an der Verbindung zur Innenwand 44. Dabei wird hauptsächlich eine aus den Seiten 46, 48 gebildete Rechteckfläche an der Verbindung auf Scherung belastet.

Die Variante nach Fig. 5 zeigt ein Gelenkteil 10, bei dem in die innerste Blechlage ausgehend von der unteren Kante 50 ein Schlitz 52 quer zur Längsrichtung 56 eingearbeitet ist, in dem ein Stift 54 eingesetzt ist. Erfindungsgemäß bildet der Stift 54 die Einhängevorrichtung für eine Zugfeder am Gelenkteil 10. Dabei gelangt der in den Schlitz 52 gefügte Stift 54 sehr weit in den Freiraum 30 des U-Profils. Der Schlitz 52 schließt mit der Deckwand 40 einen spitzen Winkel ϕ ein, dessen Spitze zum gelenkseitigen Ende 34 des Gelenkteils 10 weist, so dass der Stift 54 durch den schrägen Verlauf des Schlitzes 52 in seiner Endlage gehalten wird, wo er zwischen den äußeren Blechlagen der Seitenwände 38, 42 eingepresst und/oder verrastet ist. Eine eingehängte Zugfeder, deren Kraftwirkungslinie in Längsrichtung 56 des Gelenkteils 10 zum gelenkseitigen Ende 34 verläuft, zieht den Stift 54 zusätzlich in diese Lage.

Eine Ausgestaltung nach Fig. 6 besitzt kurze, aus der innersten Blechlage des Gelenkteils 10 ausgeklinkte Stücke 58, welche in den Freiraum 30 des U-Profils ragen, als Einhängevorrichtung für die Zugfeder. Dabei werden die Stücke 58 hauptsächlich in Längsrichtung 56 bis auf eine kurze Seite 62 aus den innersten Lagen der Seitenwände 38, 42 ausgeklinkt und in einem weiteren Arbeitsgang um 90° nach innen gebogen. Nach dem Biegen überlappen sich die gelochten Enden der Stükke 58 und bilden einen Quersteg 60 zum Einhängen der Zugfeder. Zudem ist der Quersteg 60 durch die Überlappung im Bereich der Loch 64 verstärkt.

Fig. 7 zeigt eine Variante mit gelochten und abgewinkelten Enden 66, die in Richtung gelenkseitiges Ende 34 weisen. Hierbei kann eine Zugfeder um 90° verdreht eingehängt werden.

### Bezugszeichen

- 10: Gelenkteil
- 12: Stanzschnitt
- 14: Blechteil
- 16: Blechtafel
- 18: Konturfläche
- 20: Faltfläche
- 22: Faltfläche
- 24: Rechteck
- 26: Bereich
- 28: Wischstange
- 30: Freiraum
- 32: Haken
- 34: Gelenkseitiges Ende
- 36: Bereich
- 38: Seitenwand
- 40: Deckwand
- 42: Seitenwand
- 44: Innenwand
- 46: Fläche
- 48: Fläche
- 50: Kante
- 52: Schlitz
- 54: Stift
- 56: Längsrichtung
- 58: Stück
- 60: Quersteg
- 62: Seite
- 64: Loch
- 66: Ende

## Patentansprüche

1. Gelenkteil (10) für Scheibenwischer, an das sich eine Wischstange (28) anschließt und das aus einer Blechtafel (16) durch Stanzen und Biegen gefertigt ist, wobei ausgehend von einer längs gerichteten Deckwand (40) mindestens ein Wandteil einer Seitenwand (38, 42) durch Umbiegen um 180° nach innen aus mehreren Blechlagen besteht und eine Einhängevorrichtung (32, 52, 54; 60; 58, 64) für eine Zugfeder an der innersten Blechlage befestigt ist und in einen Freiraum (30) zwischen Seitenwänden (38, 42) ragt, **dadurch gekennzeichnet, dass** in die innerste Blechlage von der unteren Kante (50) ein Schlitz (52) quer zur Längsrichtung (56) des Gelenkteils (10) eingearbeitet ist, in den ein Stift (54) eingesetzt ist, der die Einhängevorrichtung bildet.

2. Gelenkteil (10) nach Anspruch 1, **dadurch gekennzeichnet, dass** der Schlitz (52) mit der Deckwand (40) einen spitzen Winkel (ϕ) einschließt, dessen Spitze zum gelenkseitigen Ende (34) hinweist.

3. Gelenkteil (10) nach einem der vorhergehenden Ansprüche, **dadurch gekennzeichnet, dass** der Stift (54) zwischen den äußeren Blechlagen der Seitenwände (38, 42) gepresst und/oder verrastet ist.

4. Gelenkteil (10) nach dem Oberbegriff von Anspruch 1 mit jeweils einem länglichen Stück (58) als Einhängevorrichtung, dessen freies Ende gelocht ist, wobei die Enden der Stücke sich so überlappen, daß sich die Löcher (64) überdecken, **dadurch gekennzeichnet, dass** jeweils aus der innersten Blechlage der Seitenwände (38, 42) in Längsrichtung (56) das längliche Stück (58) bis auf eine kurze Seite (62) ausgeklinkt ist, wobei die Stücke um ca. 90° nach innen gebogen sind und ihre Enden sich so überlappen, dass sich die Löcher (64) überdecken.

5. Gelenkteil (10) nach Anspruch 4, **dadurch gekennzeichnet, dass** die Enden (66) in Richtung auf das gelenkseitige Ende (34) abgewinkelt sind.

6. Gelenkteil (10) nach dem Oberbegriff von Anspruch 1, wobei die Breite der Deckwand (40) und die Höhe der Seitenwände (38, 42) zur Wischstange (28) hin abnehmen und die Kontur der gestanzten Rohlinge aus Blech (14) ein Rechteck (24) mit der maximalen Breite und Länge des Rohlings gut abdeckt, wobei sich an die innerste Blechlage der Seitenwände (38, 42) jeweils eine im gebogenen Zustand parallel zur Deckwand (40) verlaufende Innenwand (44) anschließt, **dadurch gekennzeichnet, dass** an den einander zugewandten Kanten der Innenwand (44) als Einhängevorrichtung deckungsgleiche hakenförmige Teile (32) angeformt sind, die um 90° in den Freiraum (30) gebogen sind und deren freie Enden zur Wischstange (28) weisen.

7. Gelenkteil (10) nach einem der vorhergehenden Ansprüche, **dadurch gekennzeichnet, dass** eine Wischstange (28) an ihm angeformt ist.

## Claims

1. Joint part (10) for a windscreen wiper, to which a wiper rod (28) is connected and which is manufactured from a sheet-metal plate (16) by punching and bending, with, starting from a longitudinally directed top wall (40), at least one wall part of a side wall (38, 42) being composed of a plurality of sheet-metal layers by bending it over inwards through 180°, and a hook-in device (32, 52, 54; 60; 58, 64) for a tension spring being fastened to the innermost sheet-metal layer and projecting into a clearance (30) between side walls (38, 42), **characterized in that** a slot (52) transverse to the longitudinal direction (56) of the articulated part (10) is incorporated into the innermost sheet-metal layer from the lower edge (50) and a pin (54) which forms the hook-in device is inserted into it.

2. Joint part (10) according to Claim 1, **characterized in that** the slot (52) encloses with the top wall (40) an acute angle (ϕ), the point of which points towards the joint-side end (34).

3. Joint part (10) according to one of the preceding claims, **characterized in that** the pin (54) is pressed and/or latched between the outer sheet-metal layers of the side walls (38, 42).

4. Joint part (10) according to the precharacterizing clause of Claim 1, with a respective elongate piece (58) as the hook-in device, the free end of which is perforated, the ends of the pieces overlapping in such a manner that the holes (64) overlap, **characterized in that** the elongate piece (58) is disengaged apart from a short side (62) in each case from the innermost sheet-metal layer of the side walls (38, 42) in the longitudinal direction (56), the pieces being bent inwards through approx. 90° and their ends overlapping in such a manner that the holes (64) overlap.

5. Joint part (10) according to Claim 4, **characterized in that** the ends (66) are angled in the direction of the joint-side end (34).

6. Joint part (10) according to the precharacterizing clause of Claim 1, the width of the top wall (40) and the height of the side walls (38, 42) decreasing towards the wiper rod (28) and the contour of the punched blanks of sheet metal (14) readily covering a rectangle (24) with the maximum width and length of the blank, with a respective inner wall (44) which, in the bent state, runs parallel to the top wall (40) adjoining the innermost sheet-metal layer of the side walls (38, 42), **characterized in that** congruent, hook-shaped parts (32) are integrally formed on the mutually facing edges of the inner wall (44) as a hook-in device and are bent through 90° into the clearance (30) and the free ends of which point towards the wiper rod (28).

7. Joint part (10) according to one of the preceding claims, **characterized in that** a wiper rod (28) is integrally formed on it.

## Revendications

1. Pièce d'articulation (10) pour essuie-glace sur laquelle s'attache une tige d'essuie-glace (28) et fabriquée à partir d'une plaque de tôle (16) par découpage-poinçonnage et par cintrage, dont au moins une partie d'une paroi latérale (38, 42) obtenue à partir d'une paroi de recouvrement (40) allongée, est composée de plusieurs couches de tôle par cintrage de 180° vers l'intérieur ,et un dispositif d'accrochage (32, 52, 54 ; 60 ; 58, 64) fixé pour un ressort de traction sur la couche de tôle la plus intérieure, fait saillie dans un espace libre (30) compris entre les parois latérales (38, 42),
**caractérisée en ce que**
dans la couche de tôle la plus intérieure de l'arête inférieure (50) une fente (52) est prévue transversale à la direction longitudinale (56) de la pièce d'articulation (10), et une broche (54) formant le dispositif d'accrochage est insérée dans la fente.

2. Pièce d'articulation (10) selon la revendication 1,
**caractérisée en ce que**
la fente (52) forme avec la paroi de recouvrement (40) un angle aigu (ϕ) dont le sommet est tourné vers l'extrémité (34) côté articulation.

3. Pièce d'articulation (10) selon l'une quelconque des revendications précédentes,
**caractérisée en ce que**
la broche (54) est comprimée et/ou enclenchée entre les couches de tôle extérieures des parois latérales (38, 42).

4. Pièce d'articulation (10) selon le préambule de la revendication 1 avec respectivement une pièce longitudinale (58) servant de dispositif d'accrochage dont l'extrémité libre est perforée, les extrémités des pièces se chevauchant de manière à ce que des trous (64) coïncident,
**caractérisée en ce que**
respectivement la pièce longitudinale (58) va de la couche de tôle la plus intérieure des parois latérales (38, 42) dans la direction longitudinale (56) jusqu'à un côté court (62), les pièces étant cintrées à environ 90° vers l'intérieur et leurs extrémités se chevauchant de manière à ce que les trous (64) coïncident.

5. Pièce d'articulation (10) selon la revendication 4,
**caractérisée en ce que**
les extrémités (66) sont recintrées en direction de l'extrémité (34) côté articulation.

6. Pièce d'articulation (10) selon le préambule de la revendication 1, la largeur de la paroi de recouvrement (40) et la hauteur des parois latérales (38, 42) se réduisant vers la tige d'essuie-glace (28) et le contour des flancs poinçonnés en tôle (14) recouvrant un rectangle (24) ayant la largeur et la longueur maximales du flanc, avec une paroi intérieure (44) qui à l'état cintré est parallèle à la paroi de recouvrement (40) et est raccordée chaque fois à la couche de tôle la plus intérieure des parois latérales (38, 42),
**caractérisée en ce que**
comme dispositif d'accrochage, des parties (32) coïncidentes en forme de crochet, courbées à 90° dans l'espace libre (30) et dont les extrémités libres sont tournées vers la tige d'essuie-glace (28) sont formées sur les arêtes de la paroi intérieure (44) tournées les unes vers les autres.

7. Pièce d'articulation (10) selon l'une quelconque des revendications précédentes,
**caractérisée en ce qu'**
une tige d'essuie-glace (28) est formée sur cette pièce.
